# EUROPEAN PATENT APPLICATION

(11) **EP 3 409 131 A1**
(43) Date of publication of application: **05.12.2018**
(21) Application number: 17744397.5
(22) Date of filing: 27.01.2017
(51) Int. Cl.: A23L 35/00, A23L 7/109

(54) **FILLING-WRAPPED NOODLE STRIP FOOD AND METHOD FOR MANUFACTURING SAME**

(30) Priority: 28.01.2016 JP 2016014088
(71) Applicant: Ajinomoto Co., Inc., Tokyo 104-8315 (JP)
(72) Inventor: OHAMA, Yosuke, Oura-gun Gunma 370-0523 (JP); ASANO, Misaki, Oura-gun Gunma 370-0523 (JP); KURIHARA, Chiaki, Oura-gun Gunma 370-0523 (JP); ISHII, Hiroshi, Sanuki-shi Kagawa 769-2302 (JP)
(74) Representative: Strehl Schübel-Hopf & Partner
(86) International application number: PCT/JP2017/002962
(87) International publication number: WO 2017/131167

(57) **Abstract**

There are provided a filling-wrapping dough sheet food, such as Chinese dumpling, of which a peripheral portion of a dough sheet is not likely to become hard after cooking with a microwave oven or the like, and a method for producing the same. The filling-wrapping dough sheet food is prepared by using a dough sheet containing preferably 15 to 65% by weight of grain flour, preferably 1 to 48% by weight of acetylated phosphate-crosslinked starch, and preferably 1 to 42% by weight of hydroxypropylated starch based on the total weight of the dough sheet, in which the weight ratio between the grain flour and (the acetylated phosphate-crosslinked starch + the hydroxypropylated starch) is preferably 90:10 to 20:80.

## Description

### Technical Field

The present invention relates to a filling-wrapping dough sheet food (a food comprising a dough sheet and a filling, which filling is wrapped with the dough sheet), such as Chinese dumpling (gyoza), and a method for producing the same.

### Background Art

It is known that when filling-wrapping dough sheet foods are placed under conditions where dough sheets easily dry, peripheral portions (ends) of dough sheets easily become hard; for example, when Chinese dumplings are cooked by heating, especially with a microwave oven, adhering portions (ear portions) of wrapping sheets easily become hard (Patent documents 1 and 2). Peripheral portions of wrapping sheets of Chinese dumplings may also become hard after steaming depending on steaming method (Patent document 3).

For solving the aforementioned problem, there has been proposed a method of supplying moisture from a shower to upper surfaces of Chinese dumplings placed with peripheral portions thereof turned up in a steaming chamber (Patent document 3). However, this method suffers from a problem that the baked surfaces swell with moisture, and mouthfeel thereof worsens. Although this problem is solved to a certain extent by, for example, treating adhered portions of wrapping sheets of baked Chinese dumplings placed with the baked surfaces turned up with hot water of 60°C or higher (Patent document 2), this method still has room of improvement. There has also been proposed a frozen Chinese dumpling in which water is applied to pleated part of wrapping sheet (Patent document 4). However, this frozen Chinese dumpling suffers from a problem that the sheet is softened and swells with moisture, elasticity and chewiness peculiar to the sheet are lost, and thus mouthfeel thereof is impaired.

In order to improve mouthfeel of dough sheet foods to be reheated with a microwave oven, there are also known addition of oil or fat, and sugar or sugar derivative to wheat flour (Patent document 5), and a method of treating surfaces of Chinese dumplings with an aqueous solution of starch hydrolysates in order to prevent ear portions of frozen Chinese dumplings from becoming hard after cooking with a microwave oven (Patent document 6). However, it is still hard to say that the problem has fully been solved by these methods. There has further been proposed a method for producing baked Chinese dumplings comprising a steaming step and a baking step and using a conveyor, wherein temperature of the conveyor is raised from 50°C to 200 to 280°C in 1 to 8 minutes in the baking step, and warmed water or water is continuously or intermittently sprayed on wrapping sheets of Chinese dumplings in a volume of 0.01 to 0.1 ml/second per 1 cm² during steaming in the steaming step (Patent document 7). However, this method also has room of further improvement.

For improvement of mouthfeel of noodles such as udon (Japanese noodles), there are known methods of blending acetylated potato starch (Patent document 8), etherified starch or esterified starch (Patent document 9), or modified starch such as sodium hypochlorite-treated starch, acetylated starch, and hydroxypropylated starch, and crosslinking-modified starch such as phosphate-crosslinked starch, phosphate-crosslinked acetylated starch, and phosphate-crosslinked hydroxypropylated starch (Patent document 10) in a raw material. However, it is not known that blending of modified starch in dough sheets of filling-wrapping dough sheet foods prevents peripheral portions thereof from becoming hard.

### Prior art references

### Patent documents

Patent document 1: Japanese Patent Laid-open (Kokai) No. 5-161462
Patent document 2: Japanese Patent Laid-open (Kokai) No. 2001-95539
Patent document 3: Japanese Patent Laid-open (Kokai) No. 6-277013
Patent document 4: Japanese Patent Laid-open (Kokai) No. 2001-258518
Patent document 5: Japanese Patent Laid-open (Kokai) No. 5-161462
Patent document 6: Japanese Patent Laid-open (Kokai) No. 2005-65533
Patent document 7: Japanese Patent Laid-open (Kokai) No. 2003-24018
Patent document 8: Japanese Patent Laid-open (Kokai) No. 4-311359
Patent document 9: Japanese Patent Laid-open (Kokai) No. 59-71657
Patent document 10: Japanese Patent Laid-open (Kokai) No. 3-143361

### Summary of the Invention

### Object to be Achieved by the Invention

An object of the present invention is to provide a filling-wrapping dough sheet food of which a peripheral portion of a dough sheet is not likely to become hard after heating, especially after cooking with a microwave oven, and which shows superior mouthfeel according to a preferred embodiment thereof, and a method for producing the same.

### Means for Achieving the Object

The inventor of the present invention found that when acetylated phosphate-crosslinked starch and hydroxypropylated starch are blended in a dough sheet of a filling-wrapping dough sheet food, a peripheral portion of the dough sheet is not likely to become hard, and accomplished the present invention.

The present invention is thus embodied as follows.
(1) A filling-wrapping dough sheet food, the food comprising:
   a filling; and
   a dough sheet wrapping the filling,
   wherein the dough sheet contains grain flour, acetylated phosphate-crosslinked starch, and hydroxypropylated starch.
(2) The filling-wrapping dough sheet food mentioned above,
   wherein the dough sheet contains 15 to 65% by weight of the grain flour, 1 to 48% by weight of the acetylated phosphate-crosslinked starch, and 1 to 42% by weight of the hydroxypropylated starch based on the total weight of the dough sheet, and
   wherein the weight ratio between the grain flour and (the acetylated phosphate-crosslinked starch + the hydroxypropylated starch) is 90:10 to 20:80.
(3) The filling-wrapping dough sheet food mentioned above, wherein 50% by weight or more of the grain flour consists of wheat flour.
(4) The filling-wrapping dough sheet food mentioned above, which has already been heated.
(5) The filling-wrapping dough sheet food mentioned above, which is for cooking with a microwave oven.
(6) The filling-wrapping dough sheet food mentioned above, which is a frozen food.
(7) The filling-wrapping dough sheet food mentioned above, which is Chinese dumpling.
(8) The filling-wrapping dough sheet food mentioned above, wherein the moisture content of a peripheral portion of the dough sheet is 30 to 40% by weight.
(9) The filling-wrapping dough sheet food mentioned above, wherein the breaking strength of a peripheral portion of the dough sheet is 0.2 to 4.5 kgf/mm².
(10) A method for producing an already heated filling-wrapping dough sheet food, the method comprising:
   the step of heating a raw filling-wrapping dough sheet food, the food comprising a filling and a dough sheet wrapping the filling,
   wherein the dough sheet contains grain flour, acetylated phosphate-crosslinked starch, and hydroxypropylated starch.
(11) The method mentioned above,
   wherein the dough sheet contains 15 to 65% by weight of the grain flour, 1 to 48% by weight of the acetylated phosphate-crosslinked starch, and 1 to 42% by weight of the hydroxypropylated starch based on the total weight of the dough sheet, and
   wherein the weight ratio between the grain flour and (the acetylated phosphate-crosslinked starch + the hydroxypropylated starch) is 90:10 to 20:80.
(12) The method mentioned above, wherein water is sprayed on the filling-wrapping dough sheet food in the heating step, so that the moisture content of a peripheral portion of the dough sheet becomes 30 to 40% by weight after completion of the step.
(13) The method mentioned above, which comprises the step of making a batter liquid adhere to the raw filling-wrapping dough sheet food before the heating step.
(14) The method mentioned above, which comprises the step of freezing the filling-wrapping dough sheet food after the heating step.
(15) The method mentioned above, wherein the filling-wrapping dough sheet food is Chinese dumpling.

### Modes for Carrying out the Invention

Hereafter, the present invention will be explained in detail.

The filling-wrapping dough sheet food of the present invention is a filling-wrapping dough sheet food comprising a filling and a dough sheet wrapping the filling, and the dough sheet contains grain flour, acetylated phosphate-crosslinked starch, and hydroxypropylated starch.

The term "filling-wrapping dough sheet food" refers to a food produced by wrapping a filling with a dough sheet and cooking them. The dough sheet is not particularly limited so long as the filling can be fully or partially wrapped with it. Examples of the dough sheet include a sheet produced by shaping (for example, stretching) a dough containing at least grain flour and water (for example, dough having the composition of dough sheet mentioned later) into a tabular shape (i.e. sheet shape). The planar shape of the dough sheet is not particularly limited. Examples of the planar shape of the dough sheet include circular shape, polygonal shape, and so forth. Examples of the dough sheet in a circular shape include, for example, those obtained from dough in a ball-like shape by stretching the same into a circular shape, those obtained from dough rolled into a belt shape by punching out the same into a circular shape, and so forth. Specific examples of the filling-wrapping dough sheet food include Chinese dumpling (gyoza), Chinese steamed dumpling (shao-mai), Chinese steamed bun (baozi), Chinese bun, and so forth. The filling is not particularly limited so long as it can be wrapped with the dough sheet. In the case of Chinese dumpling, Chinese steamed meat dumpling, Chinese steamed bun, and so forth, the dough sheet may be referred to as wrapping sheet.

The dough sheet comprises at least grain flour, acetylated phosphate-crosslinked starch, and hydroxypropylated starch. Acetylated phosphate-crosslinked starch is a starch esterified with phosphorus oxychloride or trimetaphosphoric acid in combination with acetic anhydride or vinyl acetate. Hydroxypropylated starch is a starch etherified with propylene oxide.

The starch to be esterified or etherified is not particularly limited, and examples thereof include potato starch, tapioca starch, wheat starch, sweet potato starch, cornstarch, rice starch, adzuki bean starch, and so forth. Examples of the acetylated phosphate-crosslinked starch include acetylated phosphate-crosslinked tapioca starch, and examples of the hydroxypropylated starch include hydroxypropylated potato starch. Production methods of these modified starches are disclosed in, for example, Japanese Patent Laid-open (Kokai) No. 59-71657, and so forth. Marketed products thereof can also be used.

It is preferred that the contained amount of the acetylated phosphate-crosslinked starch is 1 to 48% by weight, preferably 2 to 42% by weight, more preferably 3 to 30% by weight, based on the total weight of the dough sheet. It is preferred that the contained amount of the hydroxypropylated starch is 1 to 42% by weight, preferably 2 to 36% by weight, more preferably 2.5 to 28% by weight, based on the total weight of the dough sheet. Although the weight ratio between the acetylated phosphate-crosslinked starch and the hydroxypropylated starch is not particularly limited, it is preferred that the ratio is 98:2 to 2:98, preferably 95:5 to 5:95, more preferably 93:7 to 7:93. It is preferred that the weight ratio between the grain flour and (the acetylated phosphate-crosslinked starch + the hydroxypropylated starch) is 90:10 to 20:80, preferably 80:20 to 30:70, more preferably 75:25 to 40:60.

It is preferred that the contained amount of the grain flour is 15 to 65% by weight, preferably 20 to 62% by weight, more preferably 25 to 60% by weight, based on the total weight of the dough sheet.

Examples of the grain flour include wheat flour, rice powder, buckwheat flour, soybean flour, and so forth. The acetylated phosphate-crosslinked starch and hydroxypropylated starch shall not be included in the scope of the grain flour. The grain flour can be appropriately chosen depending on the type of the filling-wrapping dough sheet food or the type of the filling. For example, in the case of Chinese dumpling or Chinese steamed meat dumpling, wheat flour is a preferred example of the grain flour. In the dough sheet (for example, dough sheets of these foods), the contained amount of wheat flour is preferably 50% by weight or more (namely, 50 to 100% by weight), more preferably 80% by weight or more (namely, 80 to 100% by weight), based on the total amount of the grain flour.

The dough sheet may contain ingredients other than the grain flour, acetylated phosphate-crosslinked starch, and hydroxypropylated starch, such as gluten, common salt, oils and fats, glycine, xylose, saccharides, and so forth.

The dough sheet can be obtained by kneading such materials as mentioned above and water and shaping them into a desired shape (for example, stretching into a desired thickness). It is preferred that the contained amount of water is 20 to 45% by weight, preferably 22 to 40% by weight, more preferably 25 to 35% by weight, based on the total weight of the dough sheet.

The contained amounts of the acetylated phosphate-crosslinked starch, hydroxypropylated starch, grain flour, and water mentioned above may be contained amounts in a raw dough sheet, or may be, in the case of already heated filling-wrapping dough sheet food, contained amounts in a dough sheet after heating.

The thickness of the dough sheet can be appropriately chosen depending on the type and size of the filling-wrapping dough sheet food, and it is preferred that the thickness is 0.2 to 5.0 mm, preferably 0.3 to 2.0 mm, more preferably 0.5 to 1.0 mm.

By wrapping a filling with such a dough sheet as mentioned above, a filling-wrapping dough sheet food is produced. The present invention also provides such a dough sheet as mentioned above itself.

In a typical embodiment, the filling-wrapping dough sheet food of the present invention is subjected to heat cooking such as steaming and baking, then stored, distributed, and heated with a microwave oven before eating. The filling-wrapping dough sheet food may be a food frozen in a raw state or after heat cooking. In the present invention, the expression "already heated" means that the food has been subjected to heat cooking before storage or distribution as described above. The expression "before cooking with a microwave oven" means that the food has not been subjected to cooking with a microwave oven yet (in the case of an already heated food, it means that the food has been subjected to heat cooking, but has not been subjected to cooking with a microwave oven yet), and examples of such a period include, for example, a period of storage or distribution of the filling-wrapping dough sheet food. The expression "after cooking with a microwave oven" means that the food has been subjected to heating with a microwave oven before eating.

The filling-wrapping dough sheet food of the present invention may be the same as usual filling-wrapping dough sheet foods except that the dough sheet contains hydroxypropylated starch and acetylated phosphate-crosslinked starch and has, in a preferred embodiment, prescribed physical properties. For example, the filling is prepared by mincing as required and mixing materials appropriately chosen, depending on type of the filling-wrapping dough sheet food, from meats such as chicken, pork, and beef, fish and shellfishes such as shrimp and crab, vegetables such as cabbage, onion, Chinese cabbage, Chinese chives, garlic, and shiitake mushroom, oils and fats such as lard and sesame oil, seasonings such as common salt, soy sauce, and amino acids, spices such as pepper, and other materials.

The moisture content of the filling is not particularly limited. From the aspects of suppression of moisture transfer to the baking surface and prevention of drying of the dough sheet during storage, it is preferred that the moisture content is 50 to 80% by weight, preferably 60 to 80% by weight, more preferably 65 to 75% by weight, based on the total amount of the filling.

The filling may be raw, or may be heat-cooked before being wrapped with the dough sheet.

The filling-wrapping dough sheet food may contain a mixture containing an oil-absorptive substance (such as bread crumbs, cracker, cornflakes, corn grits, wheat bran, dietary fiber, zein, puffed grain powder, and silicon dioxide) and oil or fat between the filling and the dough sheet (refer to Japanese Patent Laid-open (Kokai) No. 2006-271287).

A batter liquid containing water, oil or fat, starch, grain powder, or the like may adhere to at least the baking surface of the filling-wrapping dough sheet food (refer to WO2014/007387).

The filling-wrapping dough sheet food of the present invention may be frozen.

The filling-wrapping dough sheet food of the present invention can be produced by the same method as usual filling-wrapping dough sheet foods except that such a dough sheet as mentioned above is used. Specifically, by wrapping the filling with the dough sheet, a raw filling-wrapping dough sheet food is produced. By heating the raw filling-wrapping dough sheet food, an already heated filling-wrapping dough sheet food is produced. By freezing the already heated filling-wrapping dough sheet food, a frozen already heated filling-wrapping dough sheet food is produced. Alternatively, by freezing the raw filling-wrapping dough sheet food, a frozen raw filling-wrapping dough sheet food is produced. All of these types of foods fall within the scope of the filling-wrapping dough sheet food of the present invention.

Examples of the heating include means such as steaming, baking, and so forth. The heating may be performed by simultaneous steaming and baking, i.e., so-called smothering.

In the case of Chinese dumpling, the heating step is preferably performed thorough a step of steaming a raw Chinese dumpling obtained by wrapping a filling with a wrapping sheet, and a step of baking the steamed Chinese dumpling. The heating step is preferably performed for raw Chinese dumplings placed on a horizontal plane. In the heating step, it is preferable to spray an appropriate volume of water on a Chinese dumpling. Specifically, it is preferable to spray water on a Chinese dumpling so that the moisture content of the peripheral portion of the dough sheet after completion of the heating step is such a moisture content as mentioned later, for example, 30 to 40% by weight. For example, it is preferable to spray 0.01 to 0.2 ml, preferably 0.02 to 0.15 ml, more preferably 0.02 to 0.1 ml, of water per 1 cm² of a plane on which Chinese dumplings are placed. It is preferred that the temperature of the water to be sprayed is 5 to 95°C, preferably 20 to 90°C, more preferably 40 to 80°C. Water may be sprayed continuously or intermittently.

Before the heating step, a batter liquid may be made adhere to a raw filling-wrapping dough sheet food such as raw Chinese dumpling (refer to WO2014/007387).

By performing the steaming step and the baking step using a conveyor having a moving surface that passes through a steaming zone and a baking zone, Chinese dumplings can be continuously produced (Japanese Patent Laid-open (Kokai) Nos. 7-23868, and 2003-24018). The conveyor may be a belt conveyor or plate conveyor.

The steaming step is performed by, for example, a method of blowing a saturated vapor. Specifically, a steaming chamber that covers the conveyor in a tunnel shape is provided, a moving surface of the conveyor on which Chinese dumplings are placed is passed through the steaming chamber, and a saturated vapor is blown into the steaming chamber, to steam the Chinese dumplings. It is preferred that the steaming step is performed for 1 to 20 minutes, preferably 2 to 15 minutes, more preferably 3 to 10 minutes.

In the baking step, only the surface of the conveyor that contacts with the Chinese dumplings is heated, to bake the bottom surfaces of the Chinese dumplings. Examples of the heating method include open fire of burning gas, blowing of burning gas or hot wind, electromagnetic induction heating, and so forth. It is preferred that the heating is performed at 150 to 260°C, preferably 160 to 250°C, more preferably 170 to 230°C, for 1 to 10 minutes, preferably 2 to 8 minutes, more preferably 3 to 6 minutes.

The aforementioned method may comprise a step of freezing a Chinese dumpling after the heating step.

Filling-wrapping dough sheet foods other than Chinese dumpling can also be produced by usual methods for producing corresponding filling-wrapping dough sheet foods according to the aforementioned descriptions. That is, for any filling-wrapping dough sheet foods, according to the aforementioned descriptions, for example, water may be sprayed in the heating step, and the foods may be frozen after the heating step.

It is preferred that the moisture content of the peripheral portion of the dough sheet of the filling-wrapping dough sheet food of the present invention (for example, the food already heated but before cooking with a microwave oven) is 30 to 40% by weight, preferably 32 to 39% by weight, more preferably 35 to 38% by weight. The moisture content (moisture regain) is the weight of moisture in the total amount of the dough sheet containing moisture. The weight of moisture in the dough sheet can be measured as the weight difference of a dough sheet sample before and after drying the same. The dough sheet can be dried by, for example, keeping it at 105°C for 5 hours. The peripheral portion of the dough sheet preferably has an appropriate hardness. Specifically, it is preferred that the breaking strength of the peripheral portion of the dough sheet of the filling-wrapping dough sheet food of the present invention (for example, the food already heated but before cooking with a microwave oven) is 0.2 to 4.5 kgf/mm², preferably 0.5 to 4.0 kgf/mm², more preferably 0.8 to 3.0 kgf/mm². The breaking strength of the dough sheet can be represented as the maximum load (kgf/mm²) that can be applied to the dough sheet at the time of breakage of the dough sheet. This maximum load can be measured by using, for example, a texture analyzer (TA-Xtplus, ECO Instruments). A braid edge can be used as the plunger. The measurement speed may be, for example, 2 mm/s.

The term "peripheral portion of a dough sheet" refers to a portion around the periphery or end of the dough sheet wrapping a filling, and usually refers to a portion of the dough sheet of which the both sides are not in contact with the filling. For example, in the case of Chinese dumpling, the dough sheet (wrapping sheet) is folded so as to wrap the filling, and facing peripheral portions are stuck by pressure to enclose the filling. These pressure-stuck portions constitute the peripheral portion. This peripheral portion is also called adhering portion or ear portion. The peripheral portion may be pleated. In the case of Chinese dumpling, the aforementioned physical properties of the peripheral portion of the dough sheet can be determined by measuring the physical properties of the whole of the adhering portion of the wrapping sheet of Chinese dumpling, or a part thereof, for example, a center portion of the adhering portion of the wrapping sheet of Chinese dumpling. In the case of Chinese steamed dumpling (shao-mai), the dough sheet (wrapping sheet) may rise or may be pleated without contacting with the filling when the filling is wrapped with the dough sheet, and such a rising or pleated portion constitutes the peripheral portion.

The filling-wrapping dough sheet food of the present invention is preferably subject to heat cooking before eating. The method of heat cooking is not particularly limited, and examples thereof include cooking with a microwave oven, cooking by baking, cooking by smothering, cooking with an oven, and so forth. When the filling-wrapping dough sheet food is a frozen already heated food, for example, frozen baked Chinese dumpling, cooking with a microwave oven is a preferred example.

### Examples

Hereafter, the present invention will be more specifically explained with reference to examples.

### 1. Examination of composition of wrapping sheet for Chinese dumpling

A filling of Chinese dumpling was prepared in the combination shown in Table 1. The amounts are represented in weight part.

**Table 1**

| | | |
|---|---|---|
| Combination for filling | Minced pork | 35.0 |
| | Cabbage | 48.0 |
| | Chinese chives | 10.0 |
| | Garlic | 3.0 |
| | Common salt | 1.0 |
| | Sesame oil | 3.0 |
| | Total | 100 |

Wheat flour (48.1% by weight), wheat gluten (4.8% by weight), water (29.8% by weight), and either one of the ingredients shown in Table 2 (17.3% by weight) were kneaded, and stretched in a thickness of 0.8 mm, to prepare a wrapping sheet (dough sheet) of Chinese dumpling. When both hydroxypropylated starch and acetylated phosphate-crosslinked starch were blended, the former was blended in an amount of 5.8% by weight, and the latter was blended in an amount of 11.5% by weight. The blended amounts are represented in terms of % by weight based on the total weight of the wrapping sheet.

The filling (11 g) was wrapped in each wrapping sheet (6 g, about 9 cm in diameter), to prepare raw Chinese dumplings. A batter liquid (1 g, containing water, oil, rice powder starch, soy sauce, and so forth) was applied to the bottom of each Chinese dumpling, and the Chinese dumplings were steamed for 4 minutes and 30 seconds with a saturated vapor of 100°C, and baked at 180°C for 4 minutes, to obtain baked Chinese dumplings. The Chinese dumplings were quickly frozen, to obtain frozen baked Chinese dumplings.

The aforementioned heating step was performed with a plate conveyor or belt conveyor by placing the Chinese dumplings on a moving surface of the conveyor, and passing them thorough a steaming zone and a baking zone. The steaming step was performed for 4 minutes and 30 seconds, and the baking step was performed by heating at 180°C for 4 minutes. During the steaming step, water of 20°C was sprayed on the moving surface of the conveyor in a volume of 0.01 to 0.2 ml/cm².

Five frozen Chinese dumplings produced as described above were stored overnight at -18°C, then thawed and heated for 1 minute and 30 seconds at 500 W in a microwave oven, and evaluated by five special panelists well trained for evaluation of baked Chinese dumplings. The evaluation items were as follows, and the evaluation results were represented in ten grades with scores ranging from 1 to 10, wherein the score obtained for the waxy cornstarch addition group mentioned in Table 2 was taken as 1. The evaluation scores used in the examples were defined as follows: score 1 represents a grade equivalent to that of the waxy cornstarch addition group, score 3 represents a slightly preferred grade, score 5 represents a preferred grade, score 7 represents a fairly preferred grade, and score 10 represents an extremely preferred grade. The temperature of the products immediately after heating with a microwave oven was 85°C.

### Softness of adhering potion of wrapping sheet

### Mouthfeel of wrapping sheet (springy texture, elasticity, and chewiness)

Results are shown in Table 2. It was demonstrated that when acetylated phosphate-crosslinked starch and hydroxypropylated starch are blended in the wrapping sheet of Chinese dumpling, favorable softness of the adhering potion of the wrapping sheet and favorable mouthfeel of the wrapping sheet can be obtained even after heating, freezing, and re-heating.

**Table 2**

| Tested material | Softness of adhering potion of wrapping sheet | Mouthfeel of wrapping sheet (springy texture, elasticity, and chewiness) | Note |
|---|---|---|---|
| Trehalose | 6 | 3 | Wrapping sheet was slightly soft, but sticky. |
| Waxy cornstarch | 1 | 1 | Wrapping sheet was hard. |
| Hydroxypropylated starch | 9 | 2 | Wrapping sheet was soft, but elasticity and chewiness thereof were slightly weak. |
| Mannan starch | 7 | 2 | Wrapping sheet was soft and elastic, but showed konnyaku-like mouthfeel. |
| Acetylated phosphate-crosslinked starch | 3 | 10 | Wrapping sheet was slightly soft, and showed elasticity and chewiness. |
| Phosphate-crosslinked glutinous rice starch | 3 | 3 | Wrapping sheet was slightly hard and sticky. |
| Hydroxypropylated phosphate-crosslinked starch | 3 | 3 | Wrapping sheet was slightly hard and sticky. |
| Starch acetate | 1 | 3 | Wrapping sheet was hard. |
| Pregelatinized rice powder | 3 | 3 | Wrapping sheet was slightly hard and sticky. |
| Hydroxypropylated starch + acetylated phosphate-crosslinked starch | 10 | 10 | Wrapping sheet was soft and showed elasticity and chewiness. |

### 2. Examination of production conditions

A wrapping sheet for Chinese dumpling was prepared in the composition shown in Table 3, and frozen Chinese dumplings were prepared in the same manner as that described in the section 1. The details of the materials of the wrapping sheet are the same as those mentioned above. The Chinese dumplings of Comparative Example 1 are those produced without spraying water in the heating step.

**Table 3**

| | | Example 1 | Comparative Example 1 |
|---|---|---|---|
| Combination for wrapping sheet | Wheat flour | 48.1 | 48.1 |
| | Wheat gluten | 4.8 | 4.8 |
| | Acetylated phosphate-crosslinked starch | 11.5 | 11.5 |
| | Hydroxypropylated starch | 5.8 | 5.8 |
| | Water | 29.8 | 29.8 |
| | Total | 100.0 | 100.0 |
| | Water spraying (0.02 ml/cm²) | Performed | Not performed |

The frozen baked Chinese dumplings of both groups were evaluated after thawing and heating in the same manners as those described in the section 1. They were also evaluated for an additional evaluation item, "non-swelling of wrapping sheet with moisture". Evaluation scores for this item means as follows: score 1 represents extremely strong swelling, score 3 represents strong swelling, score 5 represents swelling, score 7 represents slight swelling, and score 10 represents no swelling.

Results are shown in Table 4. It was demonstrated that spraying of water in the heating step improves softness of the adhering portion of the wrapping sheet and mouthfeel of the wrapping sheet.

**Table 4**

| | Softness of adhering potion of wrapping sheet | Mouthfeel of wrapping sheet (springy texture, elasticity, and chewiness) | Non-swelling of wrapping sheet | Note |
|---|---|---|---|---|
| Example 1 | 10 | 10 | 10 | Adhering potion of wrapping sheet was soft, and wrapping sheet showed favorable mouthfeel with chewiness. |
| Comparative Example 1 | 4 | 5 | 10 | The whole wrapping sheet including adhering potion was slightly hard. |

### 3. Examination of amount of modified starch

Wrapping sheets for Chinese dumpling were prepared in the compositions shown in Table 5, and frozen Chinese dumplings were produced in the same manners as those described in the section 1 and 2, and evaluated after thawing and heating.

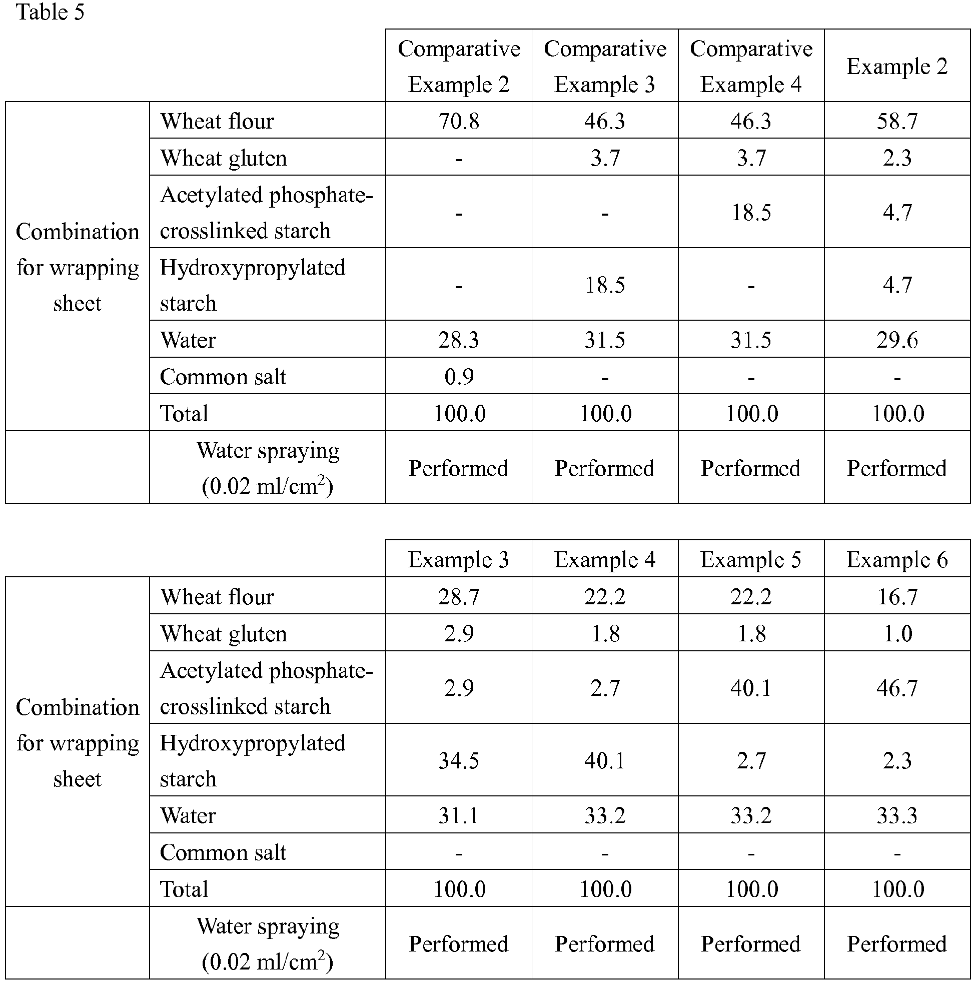

Results are shown in Table 6. Whereas the Chinese dumplings of the comparative examples gave scores of 3 or lower for at least either one of the evaluation items, the Chinese dumplings of the examples gave scores of 4 or higher for all the evaluation items. When hydroxypropylated starch was omitted, softness of the adhering portion of the wrapping sheet was not sufficient (Comparative Examples 2 and 4). When only hydroxypropylated starch was added (Comparative Example 3), the adhering portion of the wrapping sheet were soft, but mouthfeel was bad, and the sheet was swollen with moisture. By contrast, it was demonstrated that when both acetylated phosphate-crosslinked starch and hydroxypropylated starch are added, the adhering portion of the wrapping sheet is not swollen with moisture, and shows favorable softness and mouthfeel. There was also observed a tendency that a higher weight ratio of hydroxypropylated starch to acetylated phosphate-crosslinked starch provided more favorable softness of the adhering portion of the wrapping sheet, and a lower weight ratio of hydroxypropylated starch to acetylated phosphate-crosslinked starch made the adhering portion of the wrapping sheet less likely to be swollen with moisture.

**Table 6**

| | Softness of adhering potion of wrapping sheet | Mouthfeel of wrapping sheet (springy texture, elasticity, and chewiness) | Non-swelling of wrapping sheet |
|---|---|---|---|
| Comparative Example 2 | 2 | 2 | 8 |
| Comparative Example 3 | 9 | 2 | 2 |
| Comparative Example 4 | 3 | 10 | 10 |
| Example 2 | 7 | 7 | 7 |
| Example 3 | 10 | 6 | 6 |
| Example 4 | 10 | 4 | 4 |
| Example 5 | 6 | 6 | 10 |
| Example 6 | 6 | 4 | 10 |

### 4. Physicochemical evaluation

### 4-1. Moisture content of peripheral portion of wrapping sheet

A wrapping sheet for Chinese dumpling was prepared with the composition shown in Table 7, and the Chinese dumplings were produced in the same manners as those described in the sections 1 and 2. Sprayed volume of water in the heating step was 0.06 ml/cm², whereas water was not sprayed or sprayed in a volume of 0.42 ml/cm² for the comparative examples. The whole peripheral portions of the wrapping sheets (the whole adhering portions of the wrapping sheets) of these Chinese dumplings were cut out, and used as samples (n = 5 for each group).

The weight difference observed upon drying of a sample at 105°C for 5 hours was considered as the amount of moisture contained in the sample, to calculate the moisture regain. Results are shown in Table 8.

### 4-2. Breaking strength of peripheral portion of wrapping sheet

The temperature of Chinese dumplings produced in the same manner as described in the section 4-1 mentioned above was adjusted to 5°C, and the whole peripheral portions of the wrapping sheets of the Chinese dumplings were cut out, and used as samples (n = 10 for each group).

The maximum loads (kgf/mm²) applicable to the aforementioned samples at the time of breakage of the samples were measured with a texture analyzer (TA-Xtplus, ECO Instruments) under the following conditions. Results are shown in Table 8.

### (Measurement conditions)

Plunger: Blade edge
Measurement speed: 2 mm/s

**Table 7**

| | | Example 7 | Comparative Example 5 | Comparative Example 6 |
|---|---|---|---|---|
| Combination for wrapping sheet | Wheat flour | 48.1 | 48.1 | 48.1 |
| | Wheat gluten | 4.8 | 4.8 | 4.8 |
| | Acetylated phosphate-crosslinked starch | 11.5 | 11.5 | 11.5 |
| | Hydroxypropylated starch | 5.8 | 5.8 | 5.8 |
| | Water | 29.8 | 29.8 | 29.8 |
| | Total | 100.0 | 100.0 | 100.0 |
| | Water spraying (ml/cm²) | 0.06 | 0 | 0.42 |

**Table 8**

| | Example 7 | Comparative Example 5 | Comparative Example 6 |
|---|---|---|---|
| Moisture regain (%) | 35.5 | 29.1 | 41.6 |
| Breaking strength (kgf/mm²) | 1.99 | 5.07 | 0.17 |

As shown in Table 8, it was demonstrated that when an appropriate volume of water is sprayed on Chinese dumplings in the heating step, peripheral portions of wrapping sheets have appropriate moisture regain, and have favorable breaking strength.

### Industrial Applicability

The peripheral portion of the dough sheet of the filling-wrapping dough sheet food of the present invention is not likely to become hard, in particular, the peripheral portion is not likely to become hard even after the food is subject to heat cooking with a microwave oven or the like at the time of eating. According to a preferred embodiment of the present invention, even after heat cooking, the dough sheet of the filling-wrapping dough sheet food of the present invention is not likely to swell with moisture, and the peripheral potion thereof is also soft and has favorable mouthfeel, i.e., appropriate elasticity, springy texture, and chewiness. Furthermore, in the case of baked foods such as baked Chinese dumplings, crispy mouthfeel is desired for the baked surface portions, and mouthfeel showing elasticity is desired for portions other than the baked surface portions. According to a preferred embodiment of the present invention, both of these characteristics can be realized. The present invention is useful in the food manufacturing industry or food service industry.

## Claims

1. A filling-wrapping dough sheet food, the food comprising:
a filling; and
a dough sheet wrapping the filling,
wherein the dough sheet contains grain flour, acetylated phosphate-crosslinked starch, and hydroxypropylated starch.

2. The filling-wrapping dough sheet food according to claim 1,
wherein the dough sheet contains 15 to 65% by weight of the grain flour, 1 to 48% by weight of the acetylated phosphate-crosslinked starch, and 1 to 42% by weight of the hydroxypropylated starch based on the total weight of the dough sheet, and
wherein the weight ratio between the grain flour and (the acetylated phosphate-crosslinked starch + the hydroxypropylated starch) is 90:10 to 20:80.

3. The filling-wrapping dough sheet food according to claim 2, wherein 50% by weight or more of the grain flour consists of wheat flour.

4. The filling-wrapping dough sheet food according to any one of claims 1 to 3, which has already been heated.

5. The filling-wrapping dough sheet food according to any one of claims 1 to 4, which is for cooking with a microwave oven.

6. The filling-wrapping dough sheet food according to any one of claims 1 to 5, which is a frozen food.

7. The filling-wrapping dough sheet food according to any one of claims 1 to 6, which is Chinese dumpling.

8. The filling-wrapping dough sheet food according to any one of claims 5 to 7, wherein the moisture content of a peripheral portion of the dough sheet is 30 to 40% by weight.

9. The filling-wrapping dough sheet food according to any one of claims 5 to 8, wherein the breaking strength of a peripheral portion of the dough sheet is 0.2 to 4.5 kgf/mm².

10. A method for producing an already heated filling-wrapping dough sheet food, the method comprising:
the step of heating a raw filling-wrapping dough sheet food, the food comprising a filling and a dough sheet wrapping the filling,
wherein the dough sheet contains grain flour, acetylated phosphate-crosslinked starch, and hydroxypropylated starch.

11. The method according to claim 10,
wherein the dough sheet contains 15 to 65% by weight of the grain flour, 1 to 48% by weight of the acetylated phosphate-crosslinked starch, and 1 to 42% by weight of the hydroxypropylated starch based on the total weight of the dough sheet, and
wherein the weight ratio between the grain flour and (the acetylated phosphate-crosslinked starch + the hydroxypropylated starch) is 90:10 to 20:80.

12. The method according to claim 10 or 11, wherein water is sprayed on the filling-wrapping dough sheet food in the heating step, so that the moisture content of a peripheral portion of the dough sheet becomes 30 to 40% by weight after completion of the step.

13. The method according to any one of claims 10 to 12, which comprises the step of making a batter liquid adhere to the raw filling-wrapping dough sheet food before the heating step.

14. The method according to any one of claims 10 to 13, which comprises the step of freezing the filling-wrapping dough sheet food after the heating step.

15. The method according to any one of claims 10 to 14, wherein the filling-wrapping dough sheet food is Chinese dumpling.
